# EUROPÄISCHE PATENTSCHRIFT

(11) **EP 2 817 108 B1**
(45) Veröffentlichungstag und Bekanntmachung des Hinweises auf die Patenterteilung: **04.05.2016**
(21) Anmeldenummer: 13704748.6
(22) Anmeldetag: 06.02.2013
(51) Int. Cl.: B21B 38/00, B65H 7/02, B21C 51/00

(54) **DETEKTIONSVORRICHTUNG FÜR METALLBÄNDER ODER BLECHE**
DETECTION DEVICE FOR METAL STRIPS OR PLATES
DISPOSITIF PERMETTANT DE DÉTECTER DES BANDES OU TÔLES MÉTALLIQUES

(30) Priorität: 22.02.2012 DE 102012202692
(43) Veröffentlichungstag der Anmeldung: 31.12.2014
(73) Patentinhaber: SMS group GmbH, 40237 Düsseldorf (DE)
(72) Erfinder: GROßE LORDEMANN, Frederik, 40625 Düsseldorf (DE)
(74) Vertreter: Klüppel, Walter
(86) Internationale Anmeldenummer: PCT/EP2013/052265
(87) Internationale Veröffentlichungsnummer: WO 2013/124149

(56) Entgegenhaltungen:
- EP-A2- 1 066 891

## Beschreibung

### Gebiet der Erfindung

Die Erfindung betrifft eine Vorrichtung zur Detektion der Präsenz von Walz- oder Gießgut, insbesondere eines Metallbands oder Blechs, an einer Position in einer Gieß-, Walz- oder sonstigen Bandprozessanlage. Mit anderen Worten betrifft die Erfindung eine Vorrichtung zum Detektieren eine sich bewegenden Walz- oder Gießguts in einer Gieß-, Walz- oder sonstigen Bandprozessanlage. Darunter können auch Richtmaschinen oder Kühlstraßen verstanden werden.

### Stand der Technik

Insbesondere in Blechkühlungen für Grobbleche werden für die Materialverfolgung innerhalb der Anlage Synchronisierungspunkte (Synchropunkte) eingesetzt. Diese bestanden bisher zum Beispiel aus einer Wasserdüse unterhalb des Blechs bzw. Rollgangs und einer Art Becher, der von dem Wasserstrahl angehoben wird. Die angehobene Position wird von einem Endschalter erfasst. Wird nun ein Blech durch die Maschine transportiert, so wird der Wasserstrahl von dem Blech unterbrochen. Dadurch fällt der Becher durch die Schwerkraft wieder nach unten. Diese Lage wird ebenfalls durch einen Endschalter erfasst. Durch diese Anordnung kann der Zeitpunkt bestimmt werden, wann das Blech den Synchropunkt passiert.

Nachteilig bei dieser Anordnung ist allerdings der aufwendige Aufbau des Bechers mit seinen mechanischen Führungen und Endschaltern. Der Becher wird mit einer Stange in einem Rohr geführt. Diese Führung unterliegt aufgrund der hohen thermischen und abrasiven Beanspruchung einem gewissen Verschleiß. Auch die Ausrichtung der Vorrichtung an der Maschine ist aufwendig. Ebenso muss die Düse unterhalb des Rollgangs genau auf das Zentrum des Bechers ausgerichtet werden, damit sich der Becher möglichst querkraftfrei bewegen kann. Desweiteren besteht die Mechanik aus vielen Teilen, welche aus teurem, rostfreiem Stahl mit bearbeiteten Flächen gefertigt sind. Der Platzbedarf ist durch die notwendige thermische Kapselung recht hoch, woraus sich für die Positionierung der Messapparatur in der Regel Einschränkungen ergeben.

Andere bekannte Vorrichtungen umfassen mechanische Roller, welche an ein sich bewegendes Band angestellt werden. Nachteilig an diesen Rollen ist, dass sie einen gewissen Nachlauf aufweisen oder auch über das Band gleiten können und somit ungenaue oder falsche Informationen über die Präsenz eines Bandes liefern. Ferner können die Roller durch Staub oder zum Beispiel Schlacke verschmutzen, wodurch sich ihre Drehbarkeit verschlechtert und ein Verschleiß einsetzt. Im schlimmsten Fall können die Roller blockieren. Ferner müssen die Roller höhenverstellbar ausgebildet sein, da sie an verschiedene Band- oder Blechdicken anpassbar sein müssen.

Eine andere Vorrichtung ist aus der JP 60196223 A bekannt, bei der ein Wasserstrahl auf eine mit einem Kolben verbundene Platte gerichtet ist. Trifft der Wasserstrahl auf die Platte, so bewegt sich der Kolben in ein mit Öl gefülltes Rohr hinein. An einem Ende des Rohrs ist ein Stempel angeordnet, welcher durch Bewegung ein Signal auslöst, wodurch die Abwesenheit eines Walzguts signalisiert wird. Nachteilig an dieser Anordnung ist die Verwendung von einer Vielzahl von Teilen samt einer Vielzahl von mechanischen Reib- und Verschleißstellen. Ferner ist die Funktion der beschriebenen Vorrichtung durch die Bewegung mehrerer Bauteile bzw. Stempel und Kolben indirekt und relativ langsam.

Aus der EP 1 066 891 A2 ist es bekannt, die Anwesenheit/Abwesenheit von zu walzenden/gewalzten Stangen/Stäben vor und nach einem Walzwerk mittels Detektoren zu erfassen.

Eine weitere Vorrichtung gemäß dem Stand der Technik ist aus der JP 61200414 A bekannt. Bei dieser Vorrichtung wird ein Wasserstrahl über eine an einer drehbaren Achse befestigten Schale detektiert. Eine durch den Strahl hervorgerufene Drehung der Achse führt zu einer geänderten detektierten Lichtintensität eines lichtempfindlichen Sensors. Auch diese Vorrichtung umfasst eine Vielzahl mechanisch wirkender Teile, welche einem Verschleiß ausgesetzt sind. Ferner ist bei einer Messung von Lichtintensitäten nachteilig, dass in Gieß- oder Walzwerksanlagen oft sehr raue Bedingungen herrschen. So können zum Beispiel Staub oder Schlackenspritzer einen lichtempfindlichen Sensor durch Verschmutzung unbrauchbar machen oder gar zerstören. Auch der Lichtweg eines Lasers zu dem lichtempfindlichen Sensor kann durch äußere Einflüsse gestört werden, sodass falsche Positionsinformation über das bewegte Walz- oder Gießgut ermittelt werden.

Zusammengefasst besteht die Aufgabe der vorliegenden Erfindung darin, eine weiterentwickelte Vorrichtung zur Detektion der Präsenz bzw. der Position eines Metallbandes in einer Gieß-, Walz- oder sonstigen Bandprozessanlage bereitzustellen.

Eine weitere Aufgabe der Erfindung besteht darin, mindestens einen der oben genannten Nachteile zu überwinden.

Die obige technische Aufgabe wird durch die Vorrichtung zur Detektion der Präsenz bzw. Position von Walz- oder Gießgut, insbesondere eines Metallbands oder Blechs, in einer Gieß-, Walz- oder sonstigen Bandprozessanlage gemäß dem Anspruch 1 gelöst, wobei die Vorrichtung eine Detektionseinrichtung zur Detektion eines für die Präsenz des Walz- oder Gießguts indikativen Fluidstrahls umfasst und die Detektionseinrichtung ihrerseits einen mit Luft gefüllten Hohlraum aufweist, welcher eine vorzugsweise rohrförmige Öffnung bzw. einen vorzugsweise rohrförmigen Einlass umfasst. Erfindungsgemäß umfasst die Detektionsvorrichtung weiterhin einen Drucksensor zur Detektion einer Luftdruckveränderung in dem Hohlraum in Abhängigkeit des Auftreffens des Fluidstrahls auf die rohrförmige Öffnung.

Durch das Auftreffen bzw. Leiten des Strahls auf die vorzugsweise rohrförmige Öffnung wird ein Impuls an die in dem Hohlraum bzw. Hohlkörper befindliche Luft übertragen. Dieser Impulsübertrag führt zu einer Luftdruckänderung in dem Hohlraum, welcher durch einen Drucksensor registrierbar ist.

Trifft der Fluidstrahl auf die Öffnung erhöht sich der Druck in dem Hohlraum. Trifft kein Fluidstrahl mehr auf die Öffnung verringert sich der Druck in dem Hohlraum entsprechend wieder.

Mit anderen Worten dient die Vorrichtung zur Detektion eines sich bewegenden Gieß- oder Walzguts und stellt bevorzugt einen Kontroll- bzw. Synchronisationspunkt dar (welcher entlang der Bewegungsrichtung des Walz- oder Gießguts in der Anlage angeordnet ist).

Eine derart konzipierte Vorrichtung hat den Vorteil, dass keine mechanisch beweglichen Teile mehr benötigt werden. Eine nennenswerte Beeinflussung durch Staub oder Schlackenspritzer ist nahezu ausgeschlossen. Die Teileanzahl der Vorrichtung ist gering, wodurch Kosten reduziert werden. Durch die Messung mit Hilfe eines Drucksensors können zudem sehr kurze Erfassungszeiten von unter 0,1 s erreicht werden (vom Auftreffen des Strahls auf die Öffnung bis zur Detektion durch den Drucksensor). Ferner kann die Vorrichtung sowohl ein Kopfende eines sich bewegenden Walz- oder Gießguts detektieren als auch dessen Fußende. Schließlich nimmt die erfindungsgemäße Vorrichtung nur wenig Platz ein.

Gemäß einer bevorzugten Ausführungsform der Vorrichtung umfasst die Detektionseinrichtung außerhalb des Hohlraums an der vorzugsweise rohrförmigen Öffnung ein trichterförmiges Bauteil zum Leiten des Fluidstrahls in die Öffnung. Durch dieses Merkmal muss der Fluidstrahl nicht sehr genau auf die Detektionseinrichtung ausgerichtet sein, wodurch somit die Montage der Vorrichtung sowie deren Inbetriebnahme oder Betrieb vereinfacht wird. Vorzugsweise weist das trichterförmige Bauteil einen Außendurchmesser von weniger als 20 cm, vorzugsweise von weniger als 10 cm auf.

Gemäß einer weiteren bevorzugten Ausführungsform der Vorrichtung umfasst der Hohlraum zumindest einen rohrartigen Abschnitt, welcher sich über mindestens 1 m und vorzugsweise über mehr als 2 m erstreckt. Solch ein Abschnitt kann bevorzugt dazu verwendet werden, den Drucksensor in einem Abstand von mehr als 2 m von dem sich bewegenden Walz- oder Gießgut anzuordnen. Dadurch kann der Sensor noch besser geschützt werden bzw. stört weniger beim Betrieb der Anlage. Ein möglicher Austausch oder Anschluss des Sensors wird ebenso vereinfacht.

Gemäß einer weiteren bevorzugten Ausführungsform der Vorrichtung ist der Hohlraum im Wesentlichen durch ein Rohr gebildet. Bevorzugt kann der Innendurchmesser des Rohrs in der Größenordnung der verwendeten Strahldicke sein, also zum Beispiel dem 0,5- bis 5-fachen des Strahldurchmessers entsprechen. Jedoch können auch andere Rohrdurchmesser verwendet werden. Die Querschnittsformen des Rohrs oder der Öffnung können beliebig gewählt werden und sind nicht auf runde Formen beschränkt.

Gemäß einer weiteren bevorzugten Ausführungsform der Vorrichtung ist der Drucksensor an einem der Öffnung gegenüberliegenden Ende des Rohrs angeordnet.

Gemäß einer weiteren bevorzugten Ausführungsform der Vorrichtung ist der Drucksensor als Druckschalter ausgebildet. Es ist insbesondere nicht notwendig den absoluten Druck zu bestimmen. Ein Druckschalter, welcher nur eine Veränderung des Drucks detektieren kann, ist ebenfalls ausreichend. Der passende Schalter hängt von der Form des Rohrs und dem verwendeten Strahl ab (Volumenstrom, Druck, etc.). Er kann durch den Fachmann gewählt werden.

Gemäß einer weiteren bevorzugten Ausführungsform der Vorrichtung sind die Mittel zum Erzeugen des Fluidstrahls und die Detektionseinrichtung derart auf gegenüberliegenden Seiten einer Bewegungsbahn des Walz- oder Gießguts (durch die Gieß-, Walz- oder sonstigen Bandprozessanlage) angeordnet, dass, wenn das Walz- oder Gießgut einen durch die Mittel zum Erzeugen des Fluidstrahls erzeugten Fluidstrahl unterbricht, sich der Luftdruck in dem Hohlraum verringert. Somit kann der Drucksensor bzw. -geber die Anwesenheit des Bands detektieren.

Weiterhin umfasst die vorliegende Erfindung eine Anlage zum Gießen, Walzen, Richten oder Fördern eines Walz- oder Gießguts, insbesondere von Metallbändern oder Blechen, wobei die Anlage eine erfindungsgemäße Vorrichtung gemäß einer der obigen Ausführungsformen umfasst sowie eine Einrichtung zum Transportieren des Walz- oder Gießguts, welche mehrere Rollen oder Walzen zum Transportieren des Walz- oder Gießguts entlang einer Bewegungsbahn (durch die Anlage) umfasst.

Gemäß einer weiteren bevorzugten Ausführungsform ist das Walz- oder Gießgut durch die Einrichtung im Wesentlichen in eine horizontale Richtung transportierbar.

Gemäß einer weiteren bevorzugten Ausführungsform ist die Detektionseinrichtung oberhalb der Bewegungsbahn des Walz- oder Gießguts angeordnet und die Mittel zum Erzeugen des gerichteten Fluidstrahls unterhalb der Bewegungsbahn des Walz- oder Gießguts angeordnet. Durch eine solche Maßnahme wird zum Beispiel vermieden, dass ungewollt Flüssigkeiten in die Öffnung des Hohlraums tropfen bzw. fließen oder Festkörper in die Öffnung fallen, durch die ein Fehler bei der Positionsbestimmung des Bands resultieren könnte.

Ferner ist die vorliegende Erfindung ebenfalls auf ein Verfahren gerichtet zur Bestimmung der Position bzw. Präsenz von Walz- oder Gießgut, insbesondere eines Metallbands oder Blechs, welches sich durch eine Gieß-, Walz- oder sonstige Bandprozessanlage bewegt, insbesondere mit einer Vorrichtung oder Anlage gemäß einer der obigen Ausführungsformen. Erfindungsgemäß umfasst das Verfahren die Schritte des Erzeugens eines Fluidstrahls auf einer Seite einer Bewegungsbahn des Walz- oder Gießguts und des Detektierens des Fluidstrahls auf der anderen (gegenüberliegenden) Seite der Bewegungsbahn des Walz- oder Gießguts, sodass ein sich durch den Fluidstrahl bewegendes Walz- oder Gießgut diesen unterbricht. Ferner wird der ununterbrochene Fluidstrahl (bzw. der die Fluidstrahl in Abwesenheit des Bandes) in einen mit Luft gefüllten Hohlraum geführt, wobei sich bei einer Unterbrechung des Strahls durch ein sich durch den Strahl bewegendes Walz- oder Gießgut der Luftdruck in dem mit Luft gefüllten Hohlraum verringert, sodass auf Basis dieser Luftdruckverringerung (oder - veränderung) die Präsenz des Walz- oder Gießguts am Kontroll- bzw. Synchropunkt detektiert.

Die Vorteile des erfindungsgemäßen Verfahrens entsprechen weitgehend jenen der erfindungsgemäßen Vorrichtung oder Anlage.

In einer bevorzugten Ausführungsform des Verfahrens wird der Fluidstrahl unterhalb der Bewegungsbahn des Walz- oder Gießguts erzeugt und erstreckt sich in einer im Wesentlichen vertikalen Richtung, wobei der mit Luft gefüllte Hohlraum oberhalb der Bewegungsbahn des Walz- oder Gießguts zur Detektion des Fluidstrahls angeordnet wird.

In einer bevorzugten Ausführungsform des Verfahrens wird der Fluidstrahl trichterartig dem mit Luft gefüllten Hohlraum zugeführt.

In einer bevorzugten Ausführungsform des Verfahrens trifft der Fluidstrahl, wenn sich das Walz- oder Gießgut aus dem Weg (der Strahlrichtung) des Fluidstrahls heraus bewegt, auf den mit Luft gefüllten Hohlraum. Somit wird bevorzugt die Abwesenheit des Walz- oder Gießguts am Kontroll- bzw. Synchropunkt signalisiert.

Sämtliche Merkmale der oben beschriebenen Ausführungsformen können miteinander kombiniert oder gegeneinander ausgetauscht werden.

### Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen.

### Es zeigen:

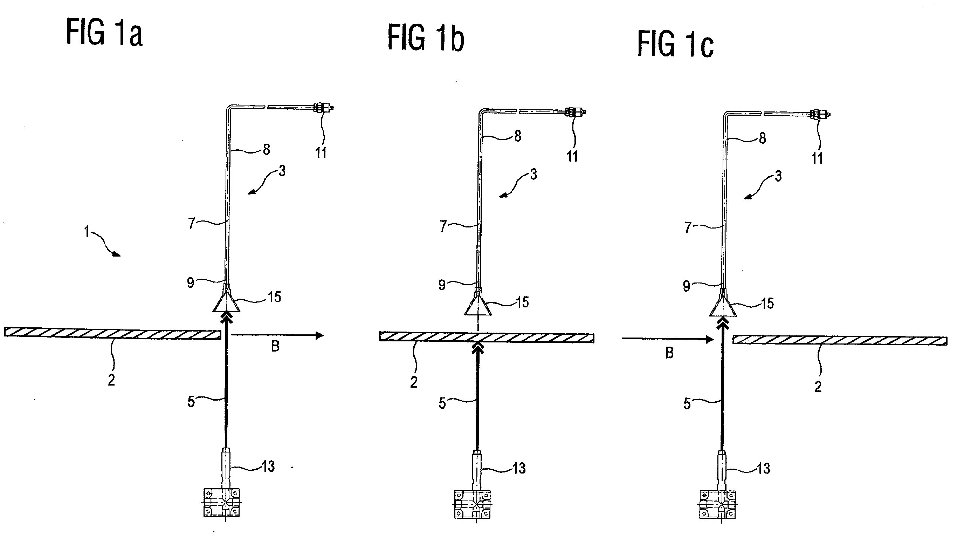

- Figur 1a: eine schematische Seitenansicht eines Ausführungsbeispiels einer erfindungsgemäßen Vorrichtung zur Detektion der Präsenz eines sich bewegenden Walz- oder Gießguts an einem Kontrollpunkt, wobei letzteres den Kontrollpunkt noch nicht passiert hat;
- Figur 1b: eine schematische Seitenansicht eines Ausführungsbeispiels einer erfindungsgemäßen Vorrichtung zur Detektion der Präsenz eines sich bewegenden Walz- oder Gießguts an einem Kontrollpunkt, wobei letzteres den Kontrollpunkt gerade passiert; und
- Figur 1c: eine schematische Seitenansicht eines Ausführungsbeispiels einer erfindungsgemäßen Vorrichtung zur Detektion der Präsenz eines sich bewegenden Walz- oder Gießguts an einem Kontrollpunkt, wobei letzteres den Kontrollpunkt passiert hat.

### Detaillierte Beschreibung der Ausführungsbeispiele

Die Figur 1 a zeigt ein erfindungsgemäßes Ausführungsbeispiel einer Vorrichtung 1 zur Detektion eines Metallbands 2 oder -blechs 2 in einer Bandprozessanlage. Die Vorrichtung 1 kann an einem Kontrollpunkt angeordnet sein bzw. solch einen Kontroll- bzw. Synchronisationspunkt bilden. Wie dargestellt bewegt sich ein Band 2 bevorzugt in die Richtung B. Die Bewegung ist allerdings nicht auf eine Orientierung eingeschränkt. Auch umgekehrte Bewegungsrichtungen des Bands 2, wie sie zum Beispiel in Reversieranlagen auftreten, sind möglich. Auch kann sich das Band 2 auf einer gebogenen oder vertikalen Bahn bewegen. Zur Detektion des Bands 2 ist bevorzugt ein Fluidstrahl 5 auf die (designierte) Bewegungsbahn D des Bands 2 gerichtet. Der Fluidstrahl 5 kann Gase, Flüssigkeiten oder Gemische von beiden umfassen. Vorzugsweise wird der Strahl 5 von einer Düse 13 erzeugt und kann vertikal auf das den Kontrollpunkt passierende Band 2 treffen. Andere Orientierungen sind jedoch ebenfalls möglich. Die erfindungsgemäße Vorrichtung 1 umfasst ebenfalls eine Detektionseinrichtung 3, welche ihrerseits ein Rohr 8 umfassen kann. Dieses Rohr 8 weist bevorzugt an einem auf die Bewegungsbahn B des Bands 2 ausgerichteten Ende eine Öffnung 9 auf. Diese Öffnung 9 kann insbesondere so ausgerichtet sein, dass ein durch die Düse 13 erzeugter Strahl 5 bei Abwesenheit des Bands in die Öffnung 9 geleitet wird bzw. trifft. Das Rohr 8 kann eine beliebige Querschnittsform aufweisen, zum Beispiel rund, vieleckig oder ellipsenförmig. An der Öffnung 9 kann ein Trichter 15 angeordnet sein, der hilft den Strahl 5 in die Öffnung zu leiten. Er ist jedoch nicht zwingend erforderlich und vereinfacht lediglich die Ausrichtung der Öffnung 9 des Rohrs 8 auf den Strahl 5. Am dem der Öffnung 9 gegenüberliegenden Ende des Rohrs 8 bzw. des Hohlraums 7 ist ein Drucksensor 11 angeordnet. Dieser kann bevorzugt durch einen Druckschalter gebildet sein.

Das Rohr 8 kann sich im Allgemeinen bevorzugt senkrecht zur Bewegungsrichtung B des Metallbands 2 erstrecken und in seiner der Öffnung 9 gegenüberliegenden Hälfte abgebogen sein. Dadurch kann vermieden werden, dass ein Gegenstand auf geradem Wege zu dem Drucksensor 11 gelangt.

Die Figur 1b zeigt dieselbe Vorrichtung wie die Figur 1 a. Es werden daher gleiche Bezugszeichen verwendet. Im Gegensatz zu der Darstellung in der Figur 1a, ist der Fluidstrahl 5 durch das Metallband 2 unterbrochen. Der Strahl 5 trifft somit nicht auf die Öffnung 9 der Detektionseinrichtung 3. Daher kann der Drucksensor 11 melden, dass das Band 2 gerade den Kontrollpunkt bzw. die Vorrichtung 1 passiert. Gemäß Figur 1 a meldet der Sensor hingegen bevorzugt, dass das Band 2 den Kontrollpunkt bzw. die Vorrichtung nicht passiert. Zwischen den in den Figuren 1 a und 1 b gezeigten Situationen hat sich das Kopfende des Bands 2 (das in Bewegungsrichtung B vordere Ende des Bands 2) durch den Strahl 5 bewegt, wodurch das Passieren des Metallbandes 2 detektiert werden konnte.

Die Figur 1c zeigt wiederum unter Verwendung gleicher Bezugszeichen die Vorrichtung 1, wobei eine Situation dargestellt ist, in der das in den Figuren 1 a und 1 b gezeigte Metallband die Vorrichtung 1 bzw. den Kontrollpunkt passiert hat. Das Band 2 hat sich demnach in die Bewegungsrichtung B weiterbewegt, sodass der Strahl 5 wiederum auf die Detektionseinrichtung 3 trifft. Zwischen den in den Abbildungen 1b und 1c gezeigten Situationen hat demnach das Band 2 mit seinem Fußende (dem in Bewegungsrichtung B hinteren Ende des Bands 2) den Strahl 5 bzw. die Vorrichtung 1 passiert. Somit ist ebenfalls die Position des Fußendes des Bands 2 bekannt. Die Verringerung oder Erhöhung des Drucks im auf den Drucksensor 11 durch den wieder auf die Öffnung 9 treffenden bzw. geleiteten Strahl 5 signalisiert, dass das Band 2 die Vorrichtung 1 passiert hat.

Im Allgemeinen kann eine Anlage zum Fördern des Bands 2 mehrere Rollen oder Walzen umfassen (nicht dargestellt). Solche Rollen oder Walzen können auf einer oder beiden (Breit-)Seiten des Bands 2 angeordnet sein. Es ist auch möglich dass solche Walzen oder Rollen in Gerüsten der Anlage angeordnet sind.

Die Vorrichtung 1 kann insbesondere in einer Kühlstrecke bzw. -anlage angeordnet sein.

Die oben beschriebenen Ausführungsbeispiele dienen vor allem dem besseren Verständnis der Erfindung und sollten nicht einschränkend verstanden werden.

Die Merkmale der beschriebenen Ausführungsbeispiele und die Gegenstände der Zusammenfassung der Erfindung können miteinander kombiniert oder auch gegeneinander ausgetauscht werden.

Ferner können die beschriebenen Merkmale durch den Fachmann an vorhandene Gegebenheiten oder vorliegende Anforderungen angepasst werden.

### Bezugszeichenliste

- 1: Vorrichtung zur Detektion der Präsenz von Walz- oder Gießgut
- 2: Walz- oder Gießgut
- 3: Detektionseinrichtung
- 5: Fluidstrahl
- 7: Hohlraum
- 8: Rohr
- 9: rohrartige Öffnung
- 11: Luftdrucksensor
- 13: Mittel zum Erzeugen eines Fluidstrahls
- 15: trichterförmiges Bauteil
- B: Bewegungsbahn / -richtung des Walz- oder Gießguts

## Patentansprüche

1. Vorrichtung (1) zur Detektion der Präsenz von Walz- oder Gießgut (2), insbesondere eines Metallbands oder Blechs (2), in einer Gieß-, Walz- oder sonstigen Bandprozessanlage, wobei die Vorrichtung Folgendes umfasst:
eine Detektionseinrichtung (3) zur Detektion eines für die Präsenz des Walz- oder Gießguts (2) indikativen Fluidstrahls (5),
Mittel (13) zum Erzeugen eines auf die Öffnung (9) der Detektionseinrichtung (3) gerichteten Fluidstrahls (5)
**dadurch gekennzeichnet, dass** die Detektionseinrichtung (3) Folgendes umfasst:
einen mit Luft gefüllten Hohlraum (7), welcher eine vorzugsweise rohrförmige Öffnung (9) aufweist; und
einen Drucksensor (11) zur Detektion einer Luftdruckveränderung in dem Hohlraum (7) in Abhängigkeit des Auftreffens des Fluidstrahls (5) auf die rohrförmige Öffnung (9).

2. Die Vorrichtung gemäß Anspruch 1, wobei die Detektionseinrichtung (3) außerhalb des Hohlraums (7) an der Öffnung (9) ein trichter-förmiges Bauteil (15) zum Leiten des Fluidstrahls (5) in die Öffnung (9) umfasst.

3. Die Vorrichtung gemäß Anspruch 1 oder 2, wobei der Hohlraum (7) zumindest einen rohrartigen Abschnitt umfasst, welcher sich über mindestens 1 m und vorzugsweise über mehr als 2 m erstreckt.

4. Die Vorrichtung gemäß einem der vorhergehenden Ansprüche, wobei der Hohlraum (7) im Wesentlichen durch ein Rohr (8) gebildet ist.

5. Die Vorrichtung gemäß Anspruch 4, wobei der Drucksensor (11) an einem der Öffnung (9) gegenüberliegenden Ende des Rohrs (8) angeordnet ist.

6. Die Vorrichtung gemäß einem der vorhergehenden Ansprüche, wobei der Drucksensor (11) als Druckschalter ausgebildet ist.

7. Die Vorrichtung gemäß einem der vorhergehenden Ansprüche, wobei die Mittel (13) zum Erzeugen des Fluidstrahls (5) und die Detektionseinrichtung (3) auf gegenüberliegenden Seiten einer Bewegungsbahn (B) des Walz- oder Gießguts (2) angeordnet sind, sodass sich der Luftdruck in dem Hohlraum (7) verringert, wenn das Walz- oder Gießgut (2) einen durch die Mittel (13) zum Erzeugen des Fluidstrahls (5) erzeugten Fluidstrahl (5) unterbricht.

8. Eine Anlage zum Gießen, Walzen, Richten, Kühlen und/oder Fördern eines Walz- oder Gießguts (2), insbesondere von Metallbändern oder Blechen (2), wobei die Anlage
eine Vorrichtung (1) gemäß einem der vorhergehenden Ansprüche umfasst sowie
eine Einrichtung zum Transportieren des Walz- oder Gießguts (2), welche mehrere Rollen oder Walzen zum Transportieren des Walz- oder Gießguts (2) entlang einer Bewegungsbahn (B) umfasst.

9. Die Anlage gemäß Anspruch 8, wobei das Walz- oder Gießgut (2) durch die Einrichtung im Wesentlichen in eine horizontale Richtung transportierbar ist.

10. Die Anlage gemäß Anspruch 8 oder 9, wobei die Detektionseinrichtung (3) oberhalb der Bewegungsbahn (B) des Walz- oder Gießguts (2) angeordnet ist und die Mittel zum Erzeugen des gerichteten Fluidstrahls (13) unterhalb der Bewegungsbahn (B) des Walz- oder Gießguts (2) angeordnet sind.

11. Ein Verfahren zur Bestimmung der Position von Walz- oder Gießgut (2) an einem Kontrollpunkt, insbesondere eines Metallbands oder Blechs (2), welches sich durch eine Gieß-, Walz- oder sonstige Bandprozessanlage bewegt, insbesondere mittels einer Vorrichtung (1) oder Anlage gemäß einem der vorhergehenden Ansprüche, wobei das Verfahren die folgenden Schritte umfasst:
Erzeugen eines Fluidstrahls (5) auf einer Seite einer Bewegungsbahn (B) des Walz- oder Gießguts (2);
Detektieren des Fluidstrahls (5) auf der anderen Seite der Bewegungsbahn (B) des Walz- oder Gießguts (2), sodass sich durch den Fluidstrahl (5) bewegendes Walz- oder Gießgut (2) den Fluidstrahl (5) unterbricht,
**dadurch gekennzeichnet, dass**
der Fluidstrahl (5) in Abwesenheit des Walz- oder Gießguts (2) zur Detektion in einen mit Luft gefüllten Hohlraum (7) geführt wird und
sich, bei Unterbrechung des Fluidstrahls (5) durch das sich durch den Strahl (5) bewegende Walz- oder Gießgut (2), der Luftdruck in dem mit Luft gefüllten Hohlraum (7) verringert, sodass auf Basis dieser Luftdruckverringerung die Präsenz des Walz- oder Gießguts (2) detektiert wird.

12. Das Verfahren gemäß Anspruch 11, wobei der Fluidstrahl (5) unterhalb der Bewegungsbahn (B) des Walz- oder Gießguts (2) derart erzeugt wird, dass sich der Fluidstrahl (5) in einer im Wesentlichen vertikalen Richtung erstreckt, und wobei der mit Luft gefüllte Hohlraum (7) oberhalb der Bewegungsbahn (B) des Walz- oder Gießguts (2) zur Detektion des Fluidstrahls (5) angeordnet wird.

13. Das Verfahren gemäß Anspruch 11 oder 12, wobei der Fluidstrahl trichterartig dem mit Luft gefüllten Hohlraum (7) zugeführt wird.

14. Das Verfahren gemäß einem der Ansprüche 11 bis 13, wobei der Fluidstrahl (5), wenn das Walz- oder Gießgut (2) sich aus dem Weg des Fluidstrahls (5) heraus bewegt, auf den mit Luft gefüllten Hohlraum (7) trifft und somit die Abwesenheit des Walz- oder Gießguts (2) signalisiert.

## Claims

1. Device (1) for detecting the presence of rolling material or cast material (2), particularly a metal strip or sheet-metal plate (2), in a casting, rolling or other strip-processing plant, wherein the device comprises the following:
a detection device (3) for detection of a fluid jet (5) indicative of the presence of the rolling or casting material (2) and
means (13) for producing a fluid jet (5) directed onto the opening (9) of the detection device (3),
**characterised in that** the detection device (3) comprises the following:
a cavity (7), which is filled with air and which has a preferably tubular opening (9); and
a pressure sensor (11) for detection of an air pressure change in the cavity (7) in dependence on impinging of the fluid jet (5) on the tubular opening (9).

2. The device according to claim 1, wherein the detection device (3) comprises, outside the cavity (7) and at the opening (9), a funnel-shaped component (15) for conducting the fluid jet (5) into the opening (9).

3. The device according to claim 1 or 2, wherein the cavity (7) has at least one tubular section which extends over at least 1 metre and preferably over more than 2 metres.

4. The device according to any one of the preceding claims, wherein the cavity (7) is formed substantially by a tube (8).

5. The device according to claim 4, wherein the pressure sensor (11) is arranged at an end of the tube (8) opposite the opening (9).

6. The device according to any one of the preceding claims, wherein the pressure sensor (11) is constructed as a pressure switch.

7. The device according to any one of the preceding claims, wherein the means (13) for producing the fluid jet (5) and the detection device (3) are arranged on opposite sides of a movement path (B) of the rolling or cast material (2) so that the air pressure in the cavity (7) reduces when the rolling or cast material (2) interrupts a fluid jet (5) produced by the means (13) for producing the fluid jet (5).

8. Plant for casting, rolling, straightening, cooling and/or conveying a rolling or cast material (2), particularly of metal strips or sheet-metal plates (2), wherein the plant comprises
a device (1) according to any one of the preceding claims and
a device for transporting the rolling or cast material (2), which comprises a plurality of rollers or rolls for transporting the rolling or cast material (2) along a movement path (B).

9. The plant according to claim 8, wherein the rolling or cast material (2) is transportable by the device substantially in a horizontal direction.

10. The plant according to claim 8 or 9, wherein the detection device (3) is arranged above the movement path (B) of the rolling or cast material (2) and the means for producing the directed fluid jet (13) are arranged below the movement path (B) of the rolling or cast material (2).

11. Method for determining the position of rolling or cast material (2) at a control point, particularly of a metal strip or sheet-metal plate (2), which moves through a casting, rolling or other strip processing plant, particularly by means of a device (1) or plant according to one of the preceding claims, wherein the method comprises the following steps:
producing a fluid jet (5) on one side of a movement path (B) of the rolling or cast material (2); and
detecting the fluid jet (5) on the other side of the movement path (B) of the rolling or cast material (2) so that rolling or cast material (2) moving through the fluid jet (5) interrupts the fluid jet (5);
**characterised in that**
the fluid jet (5) in the absence of the rolling or cast material (2) for detection is guided in a cavity (7) filled with air and
the air pressure in the cavity (7) filled with air reduces in the case of interruption of the fluid jet (5) by the rolling or cast material (2) moving through the jet (5) so that the presence of the rolling or cast material (2) is detected on the basis of this reduction in air pressure.

12. The method according to claim 11, wherein the fluid jet (5) is produced in such a way below the movement path (B) of the rolling or cast material (2) that the fluid jet (5) extends in a substantially vertical direction and wherein the cavity (7) filled with air is arranged above the movement path (B) of the rolling or cast material (2) for detection of the fluid jet (5).

13. The method according to claim 11 or 12, wherein the fluid jet is fed in funnel shape to the cavity (7) filled with air.

14. The method according to any one of claims 11 to 13, wherein the fluid jet (5) impinges on the cavity (7), which is filled with air, when the rolling or cast material (2) moves out of the way of the fluid jet (5) and thus signals the absence of the rolling or cast material (2).

## Revendications

1. Dispositif (1) pour la détection de la présence d'un produit de laminage ou de coulée (2), en particulier d'une bande métallique ou d'une tôle (2), dans une installation de coulée, de laminage ou dans d'autre installation de traitement de bandes, le dispositif comprenant ce qui suit :
un mécanisme de détection (3) pour la détection d'un jet de fluide (5) qui indique la présence du produit de laminage ou de coulée (2) ;
des moyens (13) pour générer un jet de fluide (5) dirigé sur l'ouverture (9) du mécanisme de détection (3) ;
**caractérisé en ce que** le mécanisme de détection (3) comprend ce qui suit :
un espace creux (7) rempli avec de l'air qui présente une ouverture (9), de préférence de forme tubulaire ; et
un capteur de pression (11) pour la détection d'une modification de la pression de l'air dans l'espace creux (7) en fonction du fait que le jet de fluide (5) heurte l'ouverture (9) de forme tubulaire.

2. Dispositif selon la revendication 1, dans lequel le mécanisme de détection (3) comprend, à l'extérieur de l'espace creux (7), contre l'ouverture (9), un élément (15) en forme d'entonnoir pour guider le jet de fluide (5) jusque dans l'ouverture (9).

3. Dispositif selon la revendication 1 ou 2, dans lequel l'espace creux (7) comprend au moins un tronçon de forme tubulaire, qui s'étend sur au moins 1 m et de préférence sur une distance supérieure à 2 m.

4. Dispositif selon l'une quelconque des revendications précédentes, dans lequel l'espace creux (7) est formé essentiellement par un tube (8).

5. Dispositif selon la revendication 4, dans lequel le capteur de pression (11) est disposé à une extrémité du tube (8), opposée à l'ouverture (9).

6. Dispositif selon l'une quelconque des revendications précédentes, dans lequel le capteur de pression (11) est réalisé sous la formé d'un pressostat.

7. Dispositif selon l'une quelconque des revendications précédentes, dans lequel les moyens (13) pour générer le jet de fluide (5) et le mécanisme de détection (3) sont disposés sur les côtés opposés d'une voie de défilement (B) du produit de laminage ou de coulée (2), de manière telle que l'on obtient une diminution de la pression de l'air dans l'espace creux (7) lorsque le produit de laminage ou de coulée (2) interrompt un jet de fluide (5) généré par les agents (13) destinés à générer le jet de fluide (5).

8. Installation pour la coulée, le laminage, le dressage, le refroidissement et/ou le transport d'un produit de laminage ou de coulée (2), en particulier de bandes métalliques ou de tôles (2), dans laquelle l'installation comprend
un dispositif (1) selon l'une quelconque des revendications précédentes, et
un mécanisme pour le transport du produit de laminage ou de coulée (2), qui comprend plusieurs rouleaux ou plusieurs cylindres pour le transport du produit de laminage ou de coulée (2) le long d'une voie de défilement (B).

9. Installation selon la revendication 8, dans laquelle le produit de laminage ou de coulée (2) peut être transporté à travers le mécanisme, essentiellement en direction horizontale.

10. Installation selon la revendication 8 ou 9, dans lequel le mécanisme de détection (3) est disposé au-dessus de la voie de défilement (B) du produit de laminage ou de coulée (2) et les agents destinés à générer le jet de fluide orienté (13) sont disposés en dessous de la voie de défilement (B) du produit de laminage ou de coulée (2).

11. Procédé pour déterminer la position d'un produit de laminage ou de coulée (2) à un point de contrôle, en particulier d'une bande métallique ou d'une tôle (2), qui défile à travers une installation de coulée, de laminage ou à travers une autre installation de traitement de bandes, en particulier au moyen d'un dispositif (1) ou d'une installation selon l'une quelconque des revendications précédentes, dans lequel le procédé comprend les étapes suivantes dans lesquelles :
on génère un jet de fluide (5) d'un côté d'une voie de défilement (B) du produit de laminage ou de coulée (2) ;
on détecte le jet de fluide (5) de l'autre côté de la voie de défilement (B) du produit de laminage ou de coulée (2), de manière telle que le produit de laminage ou de coulée (2) qui défile à travers le jet de fluide (5) interrompt le jet de fluide (5) ;
**caractérisé en ce que**
le jet de fluide (5) est guidé, en l'absence du produit de laminage ou de coulée (2), à des fins de détection, dans un espace creux (7) rempli avec de l'air ; et
la pression de l'air régnant dans l'espace creux (7) rempli avec de l'air diminue lors d'une interruption du jet de fluide (5) par le produit de laminage ou de coulée (2) qui défile à travers le jet (5), de manière telle que l'on détecte, sur base de cette diminution de la pression de l'air, la présence du produit de laminage ou de coulée (2).

12. Procédé selon la revendication 11, dans lequel le jet de fluide (5) est généré en dessous de la voie de défilement (B) du produit de laminage ou de coulée (2), de manière telle que le jet de fluide (5) s'étend dans une direction essentiellement verticale, et dans lequel l'espace creux (7) rempli avec de l'air est disposé au-dessus de la voie de défilement (B) du produit de laminage ou de coulée (2) à des fins de détection du jet de fluide (5).

13. Procédé selon la revendication 11 ou 12, dans lequel le jet de fluide est acheminé à l'espace creux (7) rempli avec de l'air en prenant la forme d'un entonnoir.

14. Procédé selon l'une quelconque des revendications 11 à 13, dans lequel le jet de fluide (5), lorsque le produit de laminage ou de coulée (2) s'écarte de la trajectoire du jet de fluide (5), heurte l'espace creux (7) rempli avec de l'air et signale par conséquent l'absence du produit de laminage ou de coulée (2).
